# EUROPÄISCHE PATENTSCHRIFT

(11) **EP 2 540 423 B1**
(45) Veröffentlichungstag und Bekanntmachung des Hinweises auf die Patenterteilung: **05.12.2018**
(21) Anmeldenummer: 12168006.0
(22) Anmeldetag: 15.05.2012
(51) Int. Cl.: B23B 39/00

(54) **Kernbohrmaschine**
Core drilling machine
Machine de carottage

(30) Priorität: 30.06.2011 DE 102011106054
(43) Veröffentlichungstag der Anmeldung: 02.01.2013
(73) Patentinhaber: C. & E. Fein GmbH, 73529 Schwäbisch Gmünd-Bargau (DE)
(72) Erfinder: Fischinger, Manuela, 71540 Murrhardt (DE); Garifo, Nicasio, 72555 Metzingen (DE); Scherrenbacher, Stefan, 73550 Waldstetten (DE)
(74) Vertreter: Roos, Michael

(56) Entgegenhaltungen:
- WO-A1-2007/108745
- DE-A1- 4 344 635
- GB-A- 2 311 028
- US-A- 5 126 643

## Beschreibung

Die Erfindung betrifft eine Kernbohrmaschine, mit einem Ständerteil zur Festlegung der Kernbohrmaschine an einem Bauteil, mit einer Führung am Ständerteil, entlang derer eine Kernbohreinheit verfahrbar aufgenommen ist, wobei das Ständerteil ein Ständergehäuse aufweist, an dem stirnseitig die Führung aufgenommen ist, und wobei die Kernbohreinheit ein längliches Maschinengehäuse aufweist, das mittels eines Schlittens entlang der Führung verfahrbar aufgenommen ist, und mit einem Kabel, das vom Ständerteil zur Kernbohreinheit geführt ist, wobei das Kabel vom Ständergehäuse über eine flexible Schutzhülle zur Kernbohreinheit geführt ist und an der Kernbohreinheit mittels eines schwenkbaren Drehgelenks aufgenommen ist.

Eine derartige Kernbohrmaschine ist aus der GB 2 311 028 A bekannt.

Hierbei ist ein Kabel zur Verbindung zwischen einer Kernbohreinheit und einem Ständergehäuse in einer Schleife mit Gelenken geführt.

Problematisch hierbei ist der relativ komplizierte Aufbau, eine durch die Schleife verlängerte Kabelführung und eine Knickbelastung des Kabels.

Bei einer weiteren Kernbohrmaschine gemäß der EP 0 554 017 A1 verläuft das Kabel vom Ständerteil zu einem Ende des Schlittens, an dem die Kernbohreinheit aufgenommen ist, in einer relativ weiträumigen Schleife.Nachteilig ist hierbei die Führung des Kabels, die beschädigungsanfällig und/oder einer sehr starken Knickbelastung ausgesetzt ist.

Auch bei einer Kernbohrmaschine gemä0 der US 5 126 643 A ist das Kabel zwischen dem Ständer und der Kernbohreinheit in einer weiten Schleife geführt.

Vor diesem Hintergrund besteht die Aufgabe der Erfindung darin, eine Kernbohrmaschine anzugeben, bei der die Führung des Kabels möglichst wenig stört und möglichst geringen Knickbelastungen ausgesetzt ist, und wobei das Beschädigungsrisiko möglichst minimiert ist,

Diese Aufgabe wird bei einer Kernbohrmaschine gemäß der eingangs genannten Art erfindungsgemäß dadurch gelöst, dass das Maschinengehäuse ein Motorgehäuseteil, in dem ein Motor aufgenommen ist, und ein Getriebegehäuseteil, an dem eine Werkzeugaufnahme vorgesehen ist, aufweist, wobei das Kabel mit Schutzhülle am Motorgehäuseteil mittels des schwenkbaren Drehgelenks aufgenommen ist.

Die Erfindung wird auf diese Weise durch eine Kernbohrmaschine gemäß Anspruch 1 gelöst.

Erfindungsgemäß wird nämlich durch die Aufnahme des Kabels an der Kernbohreinheit mittels eines schwenkbaren Drehgelenks eine sehr kurze Kabelführung ermöglicht, wobei gleichzeitig die Biegebelastung minimiert wird. Auf diese Weise wird eine sehr kompakte Bauweise ermöglicht und gleichzeitig die Beschädigungsgefahr für das Kabel minimiert. Ferner wird der Verfahrmöglichkeit des Schlittens an der Führung Rechnung getragen.

Gemäß einer weiteren bevorzugten Ausgestaltung der Erfindung ist am oberen Ende des Ständergehäuses ein Griffbügel aufgenommen, durch den sich das Kabel mit Schutzhülle erstreckt.

Auf diese Weise ist das Kabel sicher fixiert und gegen Beschädigungen durch einen unbeabsichtigten Eingriff geschützt.

Gemäß einer weiteren bevorzugten Ausgestaltung der Erfindung weist das Ständergehäuse zwei Seitenflächen auf, wobei sich das Kabel mit Schutzhülle vom Ständergehäuse aus mittig zwischen den beiden Seitenflächen erstreckt.

Durch diese mittige Führung des Kabels ergibt sich eine besonders geringe Behinderung durch das Kabel im Gebrauch.

Gemäß einer weiteren bevorzugten Ausgestaltung der Erfindung ist das Drehgelenk am axialen Ende des Motorgehäuses aufgenommen.

In alternativer bevorzugter Ausführung der Erfindung ist das Drehgelenk an einer der Führung zugewandten Seitenfläche des Motorgehäuses aufgenommen.

Bei beiden Ausführungen ergibt sich eine besonders günstige Führung des Kabels.

Gemäß einer weiteren bevorzugten Ausgestaltung der Erfindung ist das Drehgelenk am Motorgehäuseteil in Bezug auf das Ständergehäuse mittig aufgenommen.

Durch eine solche mittige Kabelführung vom Ständerteil zum Motorgehäuse verläuft das Kabel sicher geschützt und möglichst wenig störend.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Darstellung einer erfindungsgemäßen Kernbohrmaschine in einer ersten Ausführung;
- Fig. 2: eine Seitenansicht der Kernbohrmaschine gemäß Fig. 1 und
- Fig. 3: einen Teilschnitt durch eine Kernbohrmaschine in einer gegenüber den Fig. 1 und 2 abgewandelten Ausführung, auf dem die Kabelführung erkennbar ist.

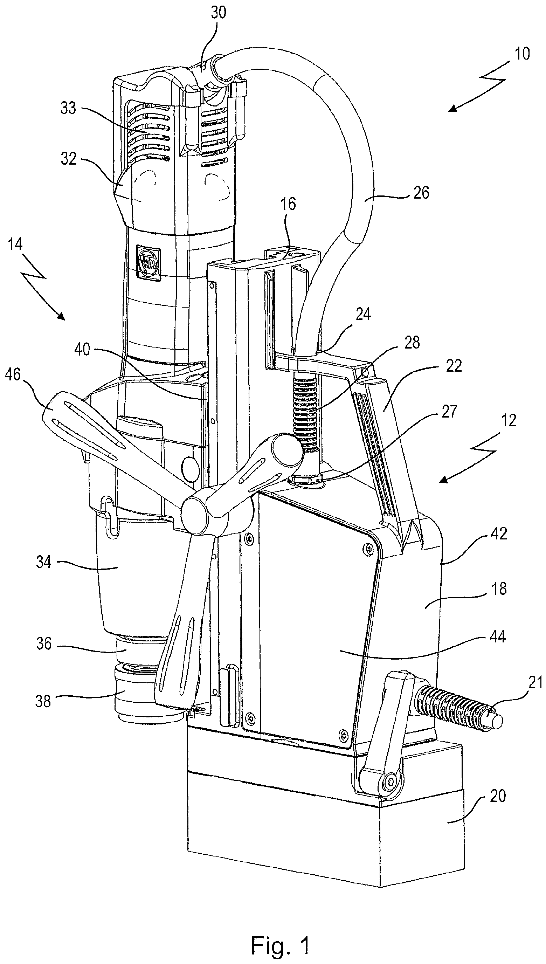

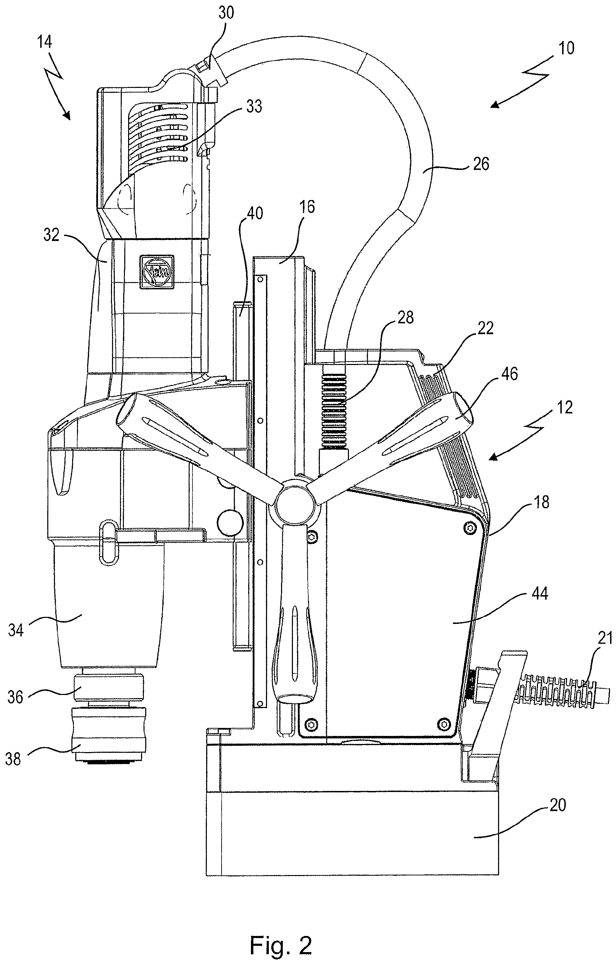

In den Fig. 1 und 2 ist eine erfindungsgemäße Kernbohrmaschine perspektivisch bzw. in der Seitenansicht dargestellt und insgesamt mit der Ziffer 10 bezeichnet.

Die Kernbohrmaschine 10 weist ein Ständerteil 12 mit einem Magnetfuß 20 und einer Führung 16 auf, entlang derer eine Kernbohreinheit 14 mittels eines Schlittens 40 verfahrbar ist. Zur Verbindung zwischen dem Ständerteil 12 und der Kernbohreinheit 14 dient ein Kabel 26.

Die Kernbohreinheit 14 weist ein längliches Maschinengehäuse auf, mit einem Motorgehäuseteil 32 am oberen Ende, von dem aus sich ein Getriebegehäuseteil 34 nach unten erstreckt. Im Motorgehäuseteil 32 ist ein Motor aufgenommen, der mit der Ziffer 33 angedeutet ist. Dieser treibt ein im Getriebegehäuseteil 34 aufgenommenes Getriebe an, an dessen unterem Ende eine Überwurfmutter 36 für eine Kernbohrwerkzeugaufnahme 38 vorgesehen ist.

Am Ständerteil 12 ist auf dem Magnetfuß 20 ein Ständergehäuse 18 aufgenommen, an dem stirnseitig die Führung 16 vorgesehen ist, und an dessen oberem Ende ein Griffbügel 22 vorgesehen ist, der sich von einem äußeren Ende des Ständergehäuses 18 aus zu einer rückwärtigen Seite der Führung 16 erstreckt. Im Ständergehäuse 18 ist eine Steuerelektronik zur Steuerung der Kernbohrmaschine aufgenommen. In den Fig. 1 und 2 ist ferner noch ein Anschlusskabel 21 erkennbar, über das die Kernbohrmaschine 10 mit Netzspannung versorgt wird.

Das Kabel 26 erstreckt sich von einem Kabelauslass 27 am oberen Ende des Ständergehäuses 12 mittig zwischen den beiden Seitenflächen 42, 44 des Ständergehäuses 18 in einer flexiblen Schutzhülle 28 geführt durch einen Durchlass 24 im Griffteil 22 unmittelbar angrenzend an die rückwärtige Seite der Führung 16 aus in einem leichten Bogen zum äußeren Ende des Motorgehäuses 32 und ist dort über ein Drehgelenk 30 in Bezug auf die Führung 16 mittig bzw. zwischen den beiden Seitenflächen des Motorgehäuses 32 mittig festgelegt.

Durch diese Anordnung und Befestigung des Kabels 26 ergibt sich eine besonders kurze Kabelführung, ein sicherer Kabelverlauf und eine geringe Biegebelastung beim Verfahren der Kernbohreinheit 14 entlang der Führung 16.

In den Fig. 1 und 2 ist ferner noch ein Hebel 46 erkennbar, mit Hilfe dessen der Vorschub der Kernbohreinheit 14 während des Kernbohrens manuell erzeugt werden kann, wenn nicht ein automatischer Betrieb gewählt ist.

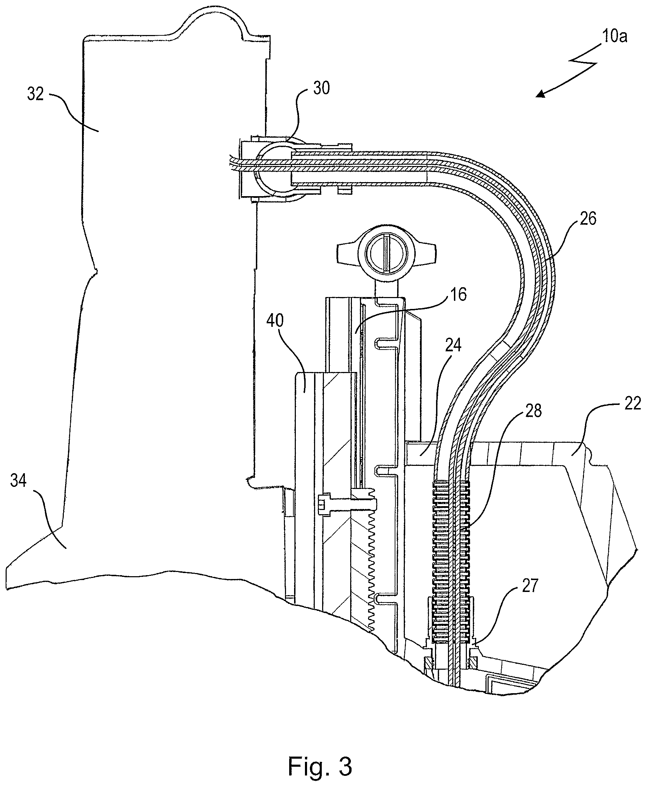

In Fig. 3 ist eine leicht abgewandelte Ausführung der Kernbohrmaschine dargestellt und insgesamt mit Ziffer 10a bezeichnet. Hierbei werden für entsprechende Teile entsprechende Bezugsziffern verwendet.

Der einzige Unterschied zu der zuvor anhand er Fig. 1 und 2 erläuterten Ausführung besteht darin, dass das Drehgelenk 30 nicht am axialen Ende des Motorgehäuses 32 aufgenommen ist, sondern etwa in Richtung zum Getriebegehäuse 34 versetzt mittig zwischen beiden Seitenflächen des Motorgehäuses 32 aufgenommen ist.

Auch auf diese Weise ergibt sich eine günstige Kabelführung.

In Fig. 3 ist infolge der teilweise geschnittenen Darstellung noch das Kabel 26 selbst erkennbar, das innerhalb der flexiblen Schutzhülle 28 geführt ist, die zwischen dem Drehgelenk 30 und dem Kabelauslass 27 verläuft und am Kabelauslass 27 noch eine zusätzliche Kunststofftülle umfasst.

## Patentansprüche

1. Kernbohrmaschine, mit einem Ständerteil (12) zur Festlegung der Kernbohrmaschine (10, 10a) an einem Bauteil, mit einer Führung (16) am Ständerteil (12), entlang derer eine Kernbohreinheit (14) verfahrbar aufgenommen ist, wobei das Ständerteil (12) ein Ständergehäuse (18) aufweist, an dem stirnseitig die Führung (16) aufgenommen ist, und wobei die Kernbohreinheit (14) ein längliches Maschinengehäuse aufweist, das mittels eines Schlittens (40) entlang der Führung (16) verfahrbar aufgenommen ist, und mit einem Kabel (26), das vom Ständerteil (12) zur Kernbohreinheit (14) geführt ist, wobei das Kabel (26) vom Ständergehäuse (18) über eine flexible Schutzhülle (28) zur Kernbohreinheit (14) geführt ist und an der Kernbohreinheit (14) mittels eines schwenkbaren Drehgelenks (30) aufgenommen ist, **dadurch gekennzeichnet, dass** das Maschinengehäuse ein Motorgehäuseteil (32), in dem ein Motor (33) aufgenommen ist, und ein Getriebegehäuseteil (34) aufweist, an dem eine Werkzeugaufnahme (38) vorgesehen ist, und dass das Kabel (26) mit Schutzhülle (28) am Motorgehäuseteil (32) mittels des schwenkbaren Drehgelenks (30) aufgenommen ist.

2. Kernbohrmaschine nach Anspruch 1, **dadurch gekennzeichnet, dass** am oberen Ende des Ständergehäuses (18) ein Griffbügel (22) aufgenommen ist, durch den sich das Kabel (26) mit Schutzhülle (28) erstreckt.

3. Kernbohrmaschine nach Anspruch 1 oder 2, **dadurch gekennzeichnet, dass** das Ständergehäuse (18) zwei Seitenflächen (42, 44) aufweist, und dass sich das Kabel (26) mit Schutzhülle (28) vom Ständergehäuse (18) aus mittig zwischen den beiden Seitenflächen (42, 44) erstreckt.

4. Kernbohrmaschine nach einem der Ansprüche 1 bis 3, **dadurch gekennzeichnet, dass** das Drehgelenk (30) am axialen Ende des Motorgehäuses (32) aufgenommen ist.

5. Kernbohrmaschine nach einem der Ansprüche 1 bis 3, **dadurch gekennzeichnet, dass** das Drehgelenk (30) an einer der Führung (16) zugewandten Seitenfläche des Motorgehäuses (32) aufgenommen ist.

6. Kernbohrmaschine nach einem der Ansprüche 1 bis 5, **dadurch gekennzeichnet, dass** das Drehgelenk (30) am Motorgehäuseteil (32) in Bezug auf das Ständergehäuse (18) mittig aufgenommen ist.

## Claims

1. Core drilling machine, having a stand part (12) for fixing the core drilling machine (10, 10a) to a component, having a guide (16) on the stand part (12), along which a core drilling unit (14) is movably received, wherein the stand part (12) has a stand housing (18), on the end face of which the guide (16) is received, and wherein the core drilling unit (14) has an elongated machine housing which is movably received by means of a carriage (40) along the guide (16), and having a cable (26) which is lead from the stand part (12) to the core drilling unit (14), wherein the cable (26) is lead from the stand housing (18) via a flexible protective sleeve (28) to the core drilling unit (14) and is received on the core drilling unit (14) by means of a pivoting swivel joint (30), **characterised in that** the machine housing has a motor housing part (32), in which a motor (33) is received, and a transmission housing part (34) on which a tool holder (38) is provided, and **in that** the cable (26) with protective sleeve (28) is received on the motor housing part (32) by means of the pivoting swivel joint (30).

2. Core drilling machine according to claim 1, **characterised in that** a handle (22) is received at the upper end of the stand housing (18), through which the cable (26) with protective sleeve (28) extends.

3. Core drilling machine according to claim 1 or 2, **characterised in that** the stand housing (18) has two side faces (42, 44) and **in that** the cable (26) with protective sleeve (28) extends from the stand housing (18) from midway between the two side faces (42, 44).

4. Core drilling machine according to one of claims 1 to 3, **characterised in that** the swivel joint (30) is received at the axial end of the motor housing (32).

5. Core drilling machine according to one of claims 1 to 3, **characterised in that** the swivel joint (30) is received on one of the side faces of the motor housing (32) facing the guide (16).

6. Core drilling machine according to one of claims 1 to 5, **characterised in that** the swivel joint (30) on the motor housing part (32) is received centrally with respect to stand housing (18).

## Revendications

1. Machine de carottage, comportant un montant (12) pour la fixation de la machine de carottage (10, 10a) sur un composant, avec un guidage (16) sur le montant (12), le long duquel une unité de carottage (14) est reçue de façon à pouvoir être déplacée, dans laquelle le montant (12) présente un logement de montant (18), sur lequel du côté avant, le guidage (16) est reçu, et dans laquelle l'unité de carottage (14) présente un logement de machine longitudinal, qui est reçu de façon à pouvoir être déplacé au moyen d'un chariot (40) le long du guidage (16), et avec un câble (26) qui est conduit du montant (12) à l'unité de carottage (14), dans laquelle le câble (26) est conduit du logement du montant (18) en passant par une enveloppe de protection souple (28) à l'unité de carottage (14) et est reçu sur l'unité de carottage (14) au moyen d'une articulation rotative pouvant pivoter (30), **caractérisée en ce que**, le logement de machine présente une partie de logement de moteur (32), dans laquelle un moteur (33) est reçu, et une partie de logement d'engrenage (34), sur laquelle une réception d'outil (38) est prévue, et **en ce que** le câble (26) avec une enveloppe de protection (28) est reçu sur la partie de logement de moteur (32) au moyen de l'articulation rotative pouvant pivoter (30).

2. Machine de carottage selon la revendication 1, **caractérisée en ce que** sur l'extrémité supérieure du logement de montant (18) un arceau de préhension (22) est reçu, au travers duquel le câble (26) avec l'enveloppe de protection (28) s'étend.

3. Machine de carottage selon la revendication 1 ou 2, **caractérisée en ce que** le logement de montant (18) présente deux surfaces latérales (42, 44), et **en ce que** le câble (26) avec l'enveloppe de protection (28) s'étend du logement de montant (18) sur une position centrale entre les deux surfaces latérales (42, 44).

4. Machine de carottage selon l'une quelconque des revendications 1 à 3, **caractérisée en ce que** l'articulation rotative (30) est reçue à l'extrémité axiale du logement de moteur (32).

5. Machine de carottage selon l'une quelconque des revendications 1 à 3, **caractérisée en ce que** l'articulation rotative (30) est reçue sur une surface latérale tournée vers le guidage (16) du logement de moteur (32).

6. Machine de carottage selon l'une quelconque des revendications 1 à 5, **caractérisée en ce que** l'articulation rotative (30) est reçue sur une position centrale sur la partie de logement de moteur (32) relative au logement de montant (18).
